# EUROPEAN PATENT APPLICATION

(11) **EP 4 275 510 A1**
(43) Date of publication of application: **15.11.2023**
(21) Application number: 22736610.1
(22) Date of filing: 07.01.2022
(51) Int. Cl.: A23K 50/30, A23K 10/20, A23K 20/158

(54) **PIG RAISING METHOD FOR REDUCING PIG BACK-FAT THICKNESS AND/OR INCREASING LEAN MEAT PERCENTAGE, COMPOSITION, AND USE THEREOF IN PREPARATION OF PIG FEED**

(30) Priority: 08.01.2021 CN 202110024140
(71) Applicant: Singao (Xiamen) Agribusiness Development Co., Ltd., Xiamen, Fujian 361006 (CN); Singao (Longyan) Biotech Co., Ltd., Longyan, Fujian 366215 (CN); Singao (Xuzhou) Biotech Co., Ltd., Xinyi, Jiangsu 221499 (CN)
(72) Inventor: LAI, Zhouwen, Xiamen, Fujian 361026 (CN); JIANG, Fei, Xinyi, Jiangsu 221499 (CN); HUANG, Yizhu, Xiamen, Fujian 361026 (CN)
(74) Representative: J A Kemp LLP
(86) International application number: PCT/CN2022/070847
(87) International publication number: WO 2022/148449

(57) **Abstract**

A pig feeding method for reducing pig back-fat thickness and/or improving lean meat percentage, a composition, and use thereof in preparing pig feed fall within the field of feed, and the technical problem to be solved is to reduce the back-fat thickness of fattening pigs. By adding additives including butyrate or butyrate derivatives, and omega 3 fatty acids during pig feeding, the back-fat thickness of the pig can be effectively reduced, which is important for improving pork quality.

## Description

### FIELD

The present disclosure relates to the field of feed, and in particular to a pig feeding method for reducing pig back-fat thickness and/or improving lean meat percentage, a composition, and use thereof in preparing pig feed.

### BACKGROUND

China is a large consumer of pork, and with the improvement in consumption level, people's demand for pork quality is getting higher and higher. However, in the current popular large-scale and intensive farming, or trapped in farming technology and conditions, or farms in the pursuit of greater economic benefits, there are widespread problems of declining pork quality and high inferiority rate. Studies have shown that among the factors restricting pig growth and pork quality, 20% depends on breed, 40% to 50% on nutrition, and 20% to 30% on feeding environment. Therefore, in the case of pig breed determination and unified management, the industry practitioners improve some characteristics related to pork quality, such as meat color, pH value, water holding capacity, tenderness, intramuscular fat, and taste evaluation and flavor through the means of nutritional regulation, to achieve the purpose of improving pork quality.

Fat in the body of livestock and poultry is essential for maintaining life, growth, and production. In livestock and poultry nutrition, fat is not only an important energy source for livestock and poultry, but also supplies essential fatty acids for livestock and poultry, and promotes the absorption and utilization of fat-soluble vitamins. However, the subcutaneous fat of meat pigs should not be too high. It has been proved that the reduction of back-fat thickness of meat pigs (that is, the reduction of subcutaneous fat) is conducive to improving the utilization rate of feed and the lean meat percentage, so that the meat tastes fresh and delicate.

Back-fat thickness is one of the important carcass traits of pigs, which reflects the fat content of pork. Low back-fat thickness values indicate low-fat content and high lean meat percentage in pork, whereas high-fat content and low lean meat percentage in pork. In pig production, back-fat thickness is mainly determined by genetic factors and, in addition, may be controlled by nutritional regulation and feed intake control. Back-fat thickness most directly reflects the pork quality and is an important economic trait.

### SUMMARY

In one aspect, the present disclosure provides a pig feeding method. Additives are added during pig feeding, the additives including:
butyrate or butyric acid derivatives, and
omega 3 fatty acids.

In some implementations, in the additives, the daily intake of the butyrate or butyric acid derivatives is 0.15 to 20 g; the daily intake of the omega 3 fatty acids is 0.3 to 14 g. In some implementations, in the additives, the daily intake of the butyrate or butyric acid derivatives is 0.4 to 10 g; the daily intake of the omega 3 fatty acids is 0.42 to 7 g.

In some implementations, in the additives, the daily intake of the butyrate or butyric acid derivatives may be, for example, 0.15, 0.2, 0.25, 0.3, 0.35, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10, 12, 14, 16, 18, 20, or a range consisting of any two of the above values. In some implementations, in the additives, the daily intake of the omega 3 fatty acids may be, for example, 0.3, 0.35, 0.36, 0.37, 0.38, 0.39, 0.4, 0.41, 0.42, 0.43, 0.44, 0.45, 0.5, 0.55, 0.6, 0.65, 0.7, 0.75, 0.8, 0.85, 0.9, 0.95, 1, 2, 3, 4, 5, 6, 7, 8, 8.5, 9, 9.5, 10, 10.5, 11, 11.5, 12, 12.5, 13, 13.5, 14, or a range consisting of any two of the above values.

In some implementations, the additives are added to a basal diet to be ingested by the pig, the additives being added to the basal diet in an amount of:
The butyrate or butyric acid derivatives contained in each ton of feed, in the effective amount of the butyrate or butyric acid derivatives, are 0.05 to 4 kg, 0.2 to 3 kg in some implementations, 0.3 to 2 kg in some implementations, 0.5 to 1 kg in some implementations, and 0.7 to 0.98 kg in some implementations.

The omega 3 fatty acids contained in each ton of feed, in the amount of the omega 3 fatty acids, are 0.14 to 14 kg, 0.42 to 7 kg in some implementations, and 0.42 to 3.5 kg in some implementations.

In some implementations, the butyrate is selected from sodium butyrate, potassium butyrate, magnesium butyrate, and calcium butyrate.

In some implementations, the butyrate is selected from sodium butyrate.

In some implementations, the butyrate is selected from DING SU.

In some implementations, the butyrate is selected from DING SU G.

In some implementations, the omega 3 fatty acids exist in the form of water-soluble microencapsulated fat powder. In some implementations, the pig feeding method is used for reducing pig back-fat thickness and/or increasing lean meat percentage.

In some implementations, the additives include the DING SU and LIPO SU omega 3.

In a specific embodiment of the present disclosure, the addition of DING SU and LIPO SU omega 3 to a basal diet has unexpectedly been found to reduce pig back-fat thickness and thereby increase production efficiency.

In some implementations, the additives include DING SU G and LIPO SU omega 3.

In some implementations, the DING SU G and the LIPO SU omega 3 are in a weight ratio of 1:1 to 10.

In some implementations, the DING SU G and the LIPO SU omega 3 are in a weight ratio of 1:1 to 5.

In some implementations, the DING SU G and the LIPO SU omega 3 are in a weight ratio of 1:1.5 to 4.

In some implementations, the DING SU G and the LIPO SU omega 3 are in a weight ratio of 1:2.5 to 3.5.

In some implementations, the DING SU G and the LIPO SU omega 3 are in a weight ratio of 1:3.

In some implementations, the pig is selected from a ternary pig; alternatively, in some implementations, the pig is selected from a ternary hybrid brown hair pig.

In some implementations, the pig is selected from a fattening pig aged 3 to 8 months. In some implementations, the pig is selected from a fattening pig aged 5 to 7 months.

In one aspect, the present disclosure provides a composition, including:
butyrate or butyric acid derivatives, and
omega 3 fatty acids.

In some implementations, the butyrate or butyric acid derivative and the omega 3 fatty acids are in a weight ratio of 1:1 to 10.

In some implementations, the butyrate or butyric acid derivative and the omega 3 fatty acids are in a weight ratio of 1:1 to 7, 1:1 to 5 in some implementations, 1:1.5 to 4 in some implementations, 1:2.5 to 3.5 in some implementations, 1:2.75 to 3.25 in some implementations, and 1:3 in some implementations.

In one aspect, the present disclosure provides the use of the composition in preparing feed additives for reducing pig back-fat thickness and/or increasing lean meat percentage.

In one aspect, the present disclosure provides the use of the composition in preparing pig feed.

In one aspect, the present disclosure provides feed including feed additives.

In some implementations, the feed additives are added to the feed in an amount of 0.2 to 14 kg/t, and 2 to 14 kg/t in some implementations.

In some implementations, the DING SU is added to the feed in an amount of 0.3 to 4 kg/t, 0.3 to 2 kg/t in some implementations, 1 to 4 kg/t in some implementations, and 1 kg/t in some implementations.

In some implementations, the LIPO SU omega 3 is added to the feed in an amount of 1 to 10 kg/t, 1 to 5 kg/t in some implementations, 1 to 4 kg/t in some implementations, and 3 kg/t in some implementations.

In some implementations, the feed further includes a basal diet.

In some implementations, the feed includes substances with the following weight percentages:
DING SU 0.02% to 0.4%;
LIPO SU 0.1% to 1%; and
basal diet 98.6% to 99.8%.

In some implementations, the feed includes substances with the following weight percentages:
DING SU 0.1% to 0.4%;
LIPO SU 0.1% to 1%; and
basal diet 98.6% to 99.8%.

In some implementations, the basal diet includes substances with the following weight percentages:
corn balance;
soybean meal 10% to 20%;
bran 5% to 10%; and
pig premix 5% to 10%.

In some implementations, the basal diet includes substances with the following weight percentages:
corn 67%;
soybean meal 15%;
bran 10%; and
pig premix 8%.

In some implementations, the basal diet includes substances with the following weight percentages:
corn 69%;
soybean meal 15%;
bran 8%; and
pig premix 8%.

In some implementations, the present disclosure further provides a preparation method for the feed, including a step of grinding the substances before mixing in proportion.

As used in the present disclosure, including as used in the embodiments and unless otherwise expressly specified, all numbers may be read as if prefaced by the words "substantially", "approximately", or "about", even if the term does not expressly appear. The phrase "approximately" or "about" may be used in describing a magnitude and/or position to indicate that the described value and/or position is within a reasonably expected range of values and/or positions. For example, a value may be ± 0.1% of the value (or numerical range), ± 1% of the value (or numerical range), ± 2% of the value (or numerical range), ± 5% of the value (or numerical range), ± 10% of the value (or numerical range), ± 15% of the value (or numerical range), and ± 20% of the value (or numerical range). Any numerical range described in the present disclosure is intended to include all subranges or intermediate values contained therein.

Disclosure of values and numerical ranges for specific parameters (for example, temperature, molecular weight, and weight percentage) does not preclude other values and numerical ranges useful to the present disclosure. It is expected that two or more specific example values for a given parameter may determine endpoints of a numerical range that the parameter may require. For example, if parameter X is exemplified in the present disclosure as having a value A and exemplified as having a value Z, it is expected that parameter X may have a numerical range from about A to about Z. Similarly, it is expected that two or more numerical ranges of a disclosed parameter, whether nested, overlapping, or distinct, include all possible combinations of numerical ranges that may be claimed using the endpoints of the disclosed ranges. For example, if the parameter X is illustrated in the present disclosure as having a value in the range of 1 to 10, it also describes a subrange of parameter X, including by way of example only, such as 1 to 9, 1 to 8, 1 to 7, 2 to 9, 2 to 8, 2 to 7, 3 to 9, 3 to 8, 3 to 7, 2 to 8, 3 to 7, 4 to 6, or 7 to 10, 8 to 10, or 9 to 10. The ranges include their endpoints and values within the endpoints; for example, the range 0 to 5 includes 0, >0, 1, 2, 3, 4, <5, and 5.

### DETAILED DESCRIPTION

The technical solutions of the present disclosure are further illustrated below by the specific embodiments, which are not intended to limit the scope of protection of the present disclosure. Certain insubstantial modifications and adaptations made by others according to the concepts of the present disclosure remain within the scope of protection of the present disclosure.

"Contain" or "comprise/include" is intended to indicate that the compositions (for example, media) and methods include the recited elements, but do not exclude other elements. When used to define the compositions and methods, "consisting essentially of" is meant to exclude other elements of any significance to the combination for the purpose. Therefore, a composition consisting essentially of the elements defined by the present disclosure does not exclude other materials or steps that do not materially affect the basic and novel characteristics of the present disclosure. "Consisting of" refers to the exclusion of other components of trace elements and substantial methodological steps. Implementations defined by each of these transition terms are within the scope of the present disclosure.

The term "and/or" as used in the present disclosure refers to any or all possible combinations containing one or more of the associated listed items. When used in a list of two or more items, the term "and/or" indicates that any one of the listed items may be used alone or any combination of two or more of the listed items may be used. For example, if a composition, combination, construct, or the like is described as including (or containing) components A, B, C, and/or D, the composition may include A alone, B alone, C alone, D alone, a combination of A and B, a combination of A and C, a combination of A and D, a combination of B and C, a combination of B and D, a combination of C and D, a combination of A, B, and C, a combination of A, B, and D, a combination of A, C, and D, a combination of B, C, and D, or a combination of A, B, C, and D for use.

### Embodiment 1

1. Test time
   2020.10.16 to 2020.11.16.
2. Test site
   A retail pig farm in Xinquan.
3. Test animals
   60 7-month-old ternary pigs weighing about 255 jin were randomly divided into 4 groups with 15 pigs in each group, each group containing 5 ternary hybrid brown hair pigs.
4. Text diets
   Diets for each treatment group were formulated according to Table 1.

**Table 1 Test diets**

| Treatment group | Diet type |
|---|---|
| Control group | Basal diet, control group |
| Group 4 DING | Basal diet + 4 kg/t DING SU raw power |
| Group 4 ZHI | Basal diet + 4 kg/t LIPO SU omega 3 |
| Group 1 + 3 | Basal diet + 1 kg/t DING SU raw powder + 3 kg/t LIPO SU omega 3 |

The basal diet was 67% corn, 15% soybean meal, 10% bran, and 8% pig premix; the pig premix was purchased from Fuzhou Dechuang Feed Co., Ltd. Pig Premix (high energy) 8314.

DING SU raw powder was from Singao Agribusiness Development Co., Ltd., containing 98% sodium butyrate.

LIPO SU omega 3 was from Singao Agribusiness Development Co., Ltd. According to the enterprise standard Q/LYXA 025-2018 "Water-soluble microencapsulated fat powder for feed" of Longyan Singao Biotechnology Co., Ltd. the content of omega 3 fatty acids in LIPO SU omega 3 was greater than or equal to 28% (oil phase, %). Since the oil phase in LIPO SU omega 3 accounts for 50%, that is, the content of omega 3 fatty acids in the whole LIPO SU omega 3 product was greater than or equal to 14%.

Accordingly, in "Group 4 DING", the content of sodium butyrate in 1 ton of diet was 3.92 kg; in "Group 4 ZHI", the content of omega 3 fatty acids in 1 ton of diet was greater than or equal to 0.56 kg; in the "Group 1 + 3", the content of sodium butyrate in 1 ton of diet was 0.98 kg, and the content of omega 3 fatty acids was greater than or equal to 0.42 kg.

Stall housing was arranged according to Table 2 for each treatment group.

**Table 2 Stall housing distribution**

| | | | |
|---|---|---|---|
| Control group | Group 4 DING | Group 4 LIPO | Group 1 + 3 |

### 5. Feeding management

At the beginning of the test, weighing was performed with stall as the unit for the initial weight. Pigs had free access to food and water during the test. Daily feed intake was recorded for each stall. The test period was 1 month, and the pigs were weighed one month later for the final weight.

### 6. Test record index

6.1 Production performance: feed intake, initial weight, and final weight;
6.2 At the end of live P2 point back-fat, 10 to 14 heads were randomly measured in each group using a back-fat meter;
6.3 Slaughter index: 3 pigs in each group were randomly selected to measure slaughter back-fat. Back-fat thickness was measured at the last rib after the vertical split of two sides of the carcass.

### 7. Test results

The test results were shown in Tables 3 to 5.

**Table 3 Production performance results**

| Group | Control | Group 4 DING | Group 4 LIPO | Group 1 + 3 |
|---|---|---|---|---|
| 32 days total feed intake/kg | 2145 | 2108.3 | 2291.9 | 2333.2 |
| Stall average daily feed intake/kg | 67.0 | 65.9 | 71.6 | 72.9 |
| Head average daily intake feed/kg | 4.47 | 4.39 | 4.77 | 4.86 |
| 10.16 Initial litter weight/jin | 3838 | 3855 | 3871 | 3877 |
| Initial head average weight/jin | 255.9 | 257.0 | 258.1 | 258.5 |
| 11.17 End litter weight/jin | 4769 | 4776 | 4869 | 4903 |
| End head average weight/kg | 317.9 | 318.4 | 324.6 | 326.9 |
| Total weight gain/jin | 931 | 921 | 998 | 1026 |
| Total weight gain/kg | 465.5 | 460.5 | 499 | 513 |
| Head average daily weight gain/kg | 0.97 | 0.96 | 1.04 | 1.07 |
| Feed conversion ratio (FCR) | 4.61 | 4.58 | 4.59 | 4.55 |

**Table 4 Live back-fat measurement results (units: mm)**

| Group | Control | 4 DING | 4 LIPO | 1 + 3 |
|---|---|---|---|---|
| Ternary | 26 | 25 | 28 | 17 |
| | 30 | 20 | 27 | 23 |
| | 29 | 23 | 29 | 18 |
| | 27 | 20 | 26 | 15 |
| | 31 | 32 | 28 | 26 |
| | 26 | 32 | 25 | 23 |
| | 34 | -- | -- | 25 |
| | 29 | -- | -- | -- |
| | 22 | -- | -- | -- |
| Ternary (except for hybrid brown hair) average | 28.22 | 25.33 | 27.17 | 21 |
| Ternary hybrid (brown hair) | 15 | 19 | 15 | 19 |
| | 20 | 20 | 20 | 15 |
| | 24 | 19 | 17 | 19 |
| | 20 | 18 | 23 | 18 |
| Brown hair average | 19.75 | 19 | 18.75 | 17.75 |
| Total average | 25.62 | 22.80 | 23.80 | 19.82 |

**Table 5 Slaughter back-fat results**

| Group | Back-fat/mm | Average back-fat/mm |
|---|---|---|
| Control | 38 | 37.3 |
| | 30 | |
| | 44 | |
| 4 DING | 34 | 33.3 |
| | 36 | |
| | 30 | |
| 4 LIPO | 37 | 32.5 |
| | 28 | |
| Group 1 + 3 | 27 | 31.7 |
| | 39 | |
| | 29 | |

The addition of DING SU and LIPO SU in daily feed helped to reduce the back-fat thickness of fattening pigs. The effect was more pronounced in non-ternary hybrid brown hair pigs. Furthermore, the reduction in live back-fat was greater in the treatment group adding both DING SU and LIPO SU omega 3 compared to the treatment group adding only DING SU or LIPO SU omega 3. The synergistic effect on back-fat reduction in the DING SU and LIPO SU omega 3 treatment groups was unexpected.

### Embodiment 2

1. Test time
   2020.10.16 to 2020.11.16.
2. Test site
   A retail pig farm in Xinquan.
3. Test animals
   120 or so 5-month-old fattening pigs weighing about 180 jin were randomly divided into 5 groups with 18 to 20 pigs in each group.
4. Text diets
   Diets for each treatment group were formulated according to Table 6.

**Table 5 Test diets**

| Treatment group | Number of heads | Diet type |
|---|---|---|
| Group 0 | 18 | Basal diet, control group |
| Group 1 + 1 | 19 | Basal diet + 1 kg/t DING SU raw powder + 1kg/t LIPO SU omega 3 |
| Group 1 + 3 | 20 | Basal diet + 1 kg/t DING SU raw powder + 3 kg/t LIPO SU omega 3 |
| Group 1 + 5 | 20 | Basal diet + 1 kg/t DING SU raw powder + 5kg/t LIPO SU omega 3 |
| Group 1 + 10 | 20 | Basal diet + 1 kg/t DING SU raw powder + +10kg/t LIPO SU omega 3 |

The basal diet was 67% corn, 15% soybean meal, 10% bran, and 8% pig premix; the pig premix was purchased from Fuzhou Dechuang Feed Co., Ltd. Pig Premix (high energy) 8314.

DING SU raw powder was from Singao Agribusiness Development Co., Ltd., containing 98% sodium butyrate.

LIPO SU omega 3 was from Singao Agribusiness Development Co., Ltd. According to the enterprise standard Q/LYXA 025-2018 "Water-soluble microencapsulated fat powder for feed" of Longyan Singao Biotechnology Co., Ltd. the content of omega 3 fatty acids in LIPO SU omega 3 was greater than or equal to 28% (oil phase, %). Since the oil phase in LIPO SU omega 3 accounts for 50%, that is, the content of omega 3 fatty acids in the whole LIPO SU omega 3 product was greater than or equal to 14%.

Stall housing was arranged according to Table 6 for each treatment group.

**Table 6 Stall housing distribution**

| | |
|---|---|
| | Group 1 + 10 |
| Group 1 + 5 | Group 1 + 3 |
| Group 0 | Group 1 + 1 |

### 5. Feeding management

At the beginning of the test, weighing was performed with stall as the unit for the initial weight. Pigs had free access to food and water during the test. Daily feed intake was recorded for each stall. The test period was two months, and the pigs were weighed once one month.

### 6. Test record index

6.1 Production performance: feed intake, initial weight, and final weight;
6.2 Pigs were weighted twice at live P2 point back-fat, and 10 heads were randomly measured in each group using a back-fat meter.

### 7. Test results

The test results were shown in Table 7.

**Table 7 Live back-fat measurement results (weight of 240 jin) (units: mm)**

| Serial number | Group 1 + 1 | Group 1 + 3 | Group 1 + 5 | Group 1 + 10 |
|---|---|---|---|---|
| 1 | 19 | 16 | 17 | 15 |
| 2 | 14 | 16 | 19 | 16 |
| 3 | 13 | 17 | 22 | 18 |
| 4 | 16 | 15 | 15 | 14 |
| 5 | 13 | 14 | 16 | 15 |
| 6 | 18 | 13 | 13 | 15 |
| 7 | 20 | 15 | 17 | 22 |
| 8 | 18 | 17 | 18 | 13 |
| 9 | 19 | 20 | 16 | 24 |
| 10 | 18 | 16 | 17 | 16 |
| Average value | 16.8 | 15.9 | 17 | 16.8 |

In various ratios of DING SU + LIPO SU omega 3, the effect of DING SU: LIPO SU omega 3 = 1:3 was optimal with a back-fat thickness of only 15.9 mm.

For fat pigs, fat deposition is the natural law of body fat metabolism, but fat deposition leads to an increase of FCR, which is not conducive to practical production. The present disclosure has surprisingly found that the addition of DING SU and LIPO SU omega 3 to feed can promote fat metabolism, slow fat deposition, in particularly reduce back-fat thickness, and thereby increase production efficiency.

In view of the many possible embodiments to which the principles of the disclosed invention may be applied, it should be recognized that the illustrated embodiments are only preferred examples of the present disclosure and should not be taken as limiting the scope of the present disclosure. Rather, the scope of the present disclosure is defined by the appended claims. We, therefore, claim protection for all inventions that fall within the scope and spirit of these claims.

## Claims

1. A pig feeding method, wherein additives are added during pig feeding, the additives comprising:
butyrate or butyric acid derivatives, and
omega 3 fatty acids.

2. The pig feeding method according to claim 1, wherein in the additives,
daily intake of the butyrate or butyric acid derivatives is 0.15 to 20 g; the daily intake of the omega 3 fatty acids is 0.3 to 14 g;
preferably, the daily intake of the butyrate or butyric acid derivatives is 0.4 to 10 g; the daily intake of the omega 3 fatty acids is 0.42 to 7 g.

3. The pig feeding method according to claim 1 or 2, wherein the additives are added to a basal diet to be ingested by the pig, the additives being added to the basal diet in an amount of:
the butyrate or butyric acid derivatives contained in each ton of feed, in the amount of the butyrate or butyric acid derivatives, are 0.05 to 4 kg, preferably 0.2 to 3 kg, preferably 0.3 to 2 kg, more preferably 0.5 to 1 kg, and further preferably 0.7 to 0.98 kg;
the omega 3 fatty acids contained in each ton of feed, in the amount of the omega 3 fatty acids, are 0.14 to 14 kg, preferably 0.42 to 7 kg, and more preferably 0.42 to 3.5 kg;
preferably, the butyrate is selected from sodium butyrate, potassium butyrate, magnesium butyrate, and calcium butyrate;
preferably, the butyrate is selected from sodium butyrate;
preferably, the butyrate is selected from DING SU;
preferably, the butyrate is selected from DING SU G;
preferably, the omega 3 fatty acids exist in a form of water-soluble microencapsulated fat powder; and
preferably, the pig feeding method is used for reducing pig back-fat thickness and/or increasing lean meat percentage.

4. A pig feeding method, wherein additives are added during pig feeding, the additives comprising: DING SU and LIPO SU;
preferably, the LIPO SU is LIPO SU omega 3;
preferably, the additives comprise DING SU G and the LIPO SU omega 3;
preferably, the DING SU G and the LIPO SU omega 3 are in a weight ratio of 1:1 to 10;
preferably, the DING SU G and the LIPO SU omega 3 are in a weight ratio of 1:1 to 5;
preferably, the DING SU G and the LIPO SU omega 3 are in a weight ratio of 1: 1.5 to 4;
preferably, the DING SU G and the LIPO SU omega 3 are in a weight ratio of 1:2.5 to 3.5;
preferably, the DING SU G and the LIPO SU omega 3 are in a weight ratio of 1:3;
preferably, the pig is selected from a ternary pig; or preferably, the pig is selected from a ternary hybrid brown hair pig or Duroc-Landrace-Yorkshire ternary hybrid pig;
preferably, the pig is selected from a fattening pig aged 3 to 8 months; and
preferably, the pig is selected from a fattening pig aged 5 to 7 months.

5. A composition, comprising:
butyrate or butyric acid derivatives, and
omega 3 fatty acids.

6. The composition according to claim 5, wherein the butyrate or butyric acid derivatives and the omega 3 fatty acids are in a weight ratio of 1:1 to 10;
preferably, the weight ratio is 1: 1 to 7;
preferably, the weight ratio is 1: 1 to 5;
preferably, the weight ratio is 1: 1.5 to 4;
preferably, the weight ratio is 1:2.5 to 3.5;
preferably, the weight ratio is 1:2.75 to 3.25; and
preferably, the weight ratio is 1:3.

7. The composition according to claim 5 or 6, wherein the butyrate is selected from sodium butyrate, potassium butyrate, magnesium butyrate, and calcium butyrate;
preferably, the butyrate is selected from sodium butyrate;
preferably, the butyrate is selected from DING SU;
preferably, the butyrate is selected from DING SU G;
preferably, the omega 3 fatty acids exist in a form of water-soluble microencapsulated fat powder; and
preferably, the additives comprise the DING SU and LIPO SU omega 3.

8. Use of the composition according to any one of claims 5 to 7 in preparing feed additives for reducing pig back-fat thickness and/or increasing lean meat percentage.

9. Use of the composition according to any one of claims 5 to 7 in preparing pig feed.

10. Pig feed, comprising feed additives according to any one of claims 5 to 7; wherein
preferably, the feed additives are added to the feed in an amount of 0.2 to 14 kg/t;
preferably, the DING SU is added to the feed in an amount of 0.3 to 2 kg/t, and preferably 1 kg/t;
preferably, the LIPO SU omega 3 is added to the feed in an amount of 1 to 10 kg/t, preferably 1 to 5 kg/t, and more preferably 3 kg/t;
preferably, the feed further comprises a basal diet;
preferably, the feed comprises substances with the following weight percentages:
DING SU 0.02% to 0.4%;
LIPO SU 0.1% to 1%; and
basal diet 98.6% to 99.8%;
preferably, the basal diet comprises substances with the following weight percentages:
corn balance;
soybean meal 10% to 20%;
bran 5% to 10%; and
pig premix 5% to 10%;
preferably, the basal diet comprises substances with the following weight percentages:
corn 67%;
soybean meal 15%;
bran 10%; and
pig premix 8%;
or preferably, the basal diet comprises substances with the following weight percentages:
corn 69%;
soybean meal 15%;
bran 8%; and
pig premix 8%.
